# EUROPEAN PATENT SPECIFICATION

(11) **EP 1 793 718 B1**
(45) Date of publication and mention of the grant of the patent: **13.08.2008**
(21) Application number: 04761541.4
(22) Date of filing: 23.09.2004
(51) Int. Cl.: A47J 37/07

(54) **ARRANGEMENT FOR A GRILL**
ANORDNUNG FÜR EINEN GRILL
AGENCEMENT POUR GRIL

(43) Date of publication of application: 13.06.2007
(73) Proprietor: IKEDA Empresarial Ltda., CEP-17512-080-Marília Estado de São Paulo (BR)
(72) Inventor: IKEDA, Tadaharu, CEP-17512-080-Marília Estado de São Paulo (BR)
(74) Representative: Johnstone, Douglas Ian
(86) International application number: PCT/BR2004/000181
(87) International publication number: WO 2006/032117

(56) References cited:
- EP-A1- 0 353 195
- FR-A3- 2 811 534
- GB-A- 2 324 024

## Description

The present specification refers to an application for the grant of a patent for a grill, in the field of the home utensils, and which provides an arrangement in order to enable barbecuing in a so-called "open flame" style using an oven.

One of the most traditional ways of preparing a barbecue is to use the so-called "open flame" style, according to which cuts of meat are fixed to skews or grilling baskets, which are then arranged vertically around a flame. Document FR-2811534 discloses a barbeque cooking apparatus.

Market surveys have found out that it would be desirable to have a equipment that would enable the transfer of such a traditional way of barbecuing to modem food preparation means, including a gas oven.

Such surveys have also shown that it would be desirable if such barbecuing equipment could provide the meat with the traditional barbecue "open flame" taste; not produce smoke during its use; be portable, easy-to-use and easy-to-clean, and also be capable of meeting other specifications required for modem home tools.

Thus, the object of the arrangement of the present application for a patent is to provide a portable, dismountable grill for "open flame" style barbecuing, and which can be used in gas ovens, the construction, working and advantages of which are described below with reference to the attached drawings, in which:

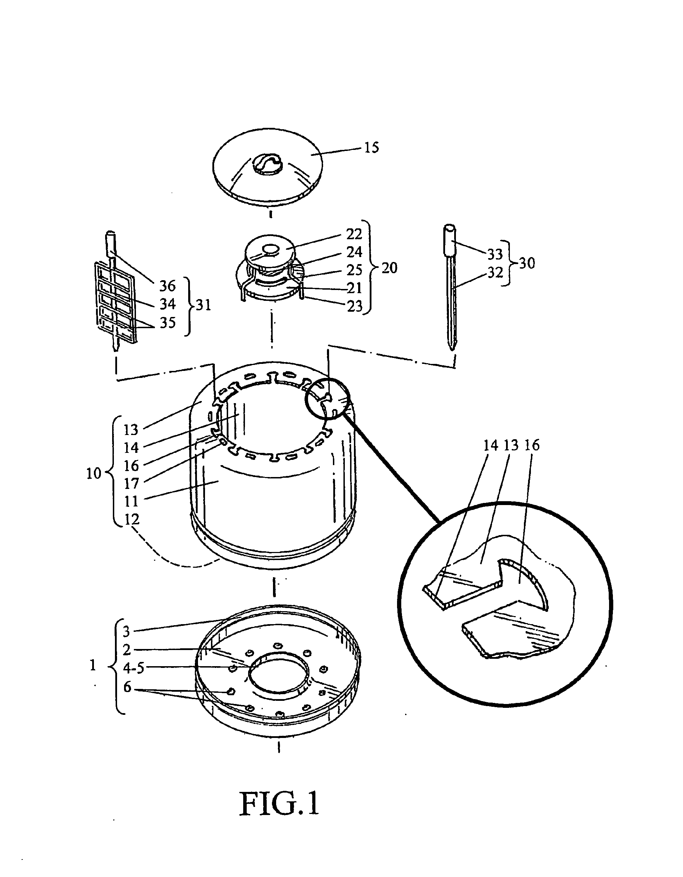

Figure 1 shows an exploded perspective view of the grill, and an enlarged detail showing a skew supporting hole;

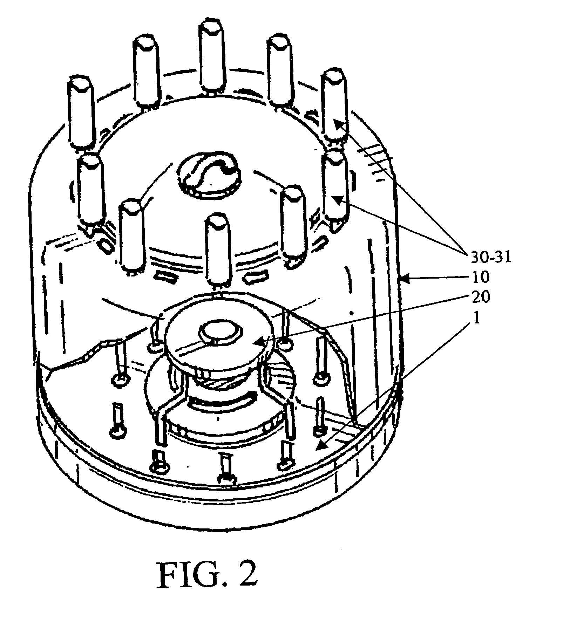

Figure 2 shows, in partial cross-section, the grill as mounted;

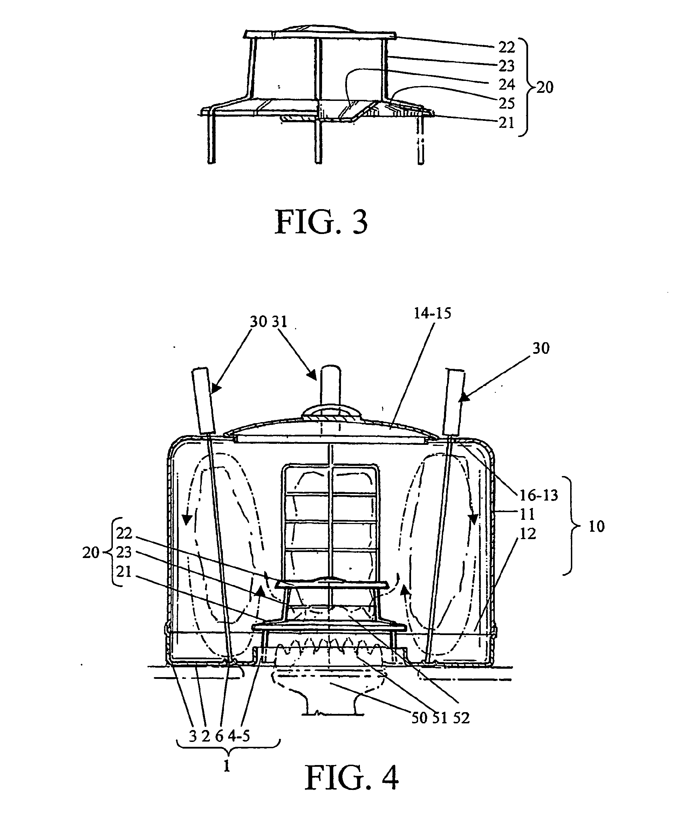

Figure 3 shows, in partial cross-section, a detail of a grill; and
Figure 4 shows a sectional view of the grill as mounted and in use.

According to the above-mentioned drawings, the grill is intended to "open flame" barbecue in a gas oven, and essentially comprises: a base platter 1; a bell-shaped container 10; a heat diffuser 20; and a set of skews 30 and vertical baskets 31.

The base platter 1 is formed by: a bottom part 2 selected to be supported over a gas burner 50 of a gas oven; and a not too high peripheral wall 3, where the upper bell-shaped container 10 is coupled and supported; such bottom part 2 being provided with: a middle opening 4 for receiving a flame from the gas burner 50, and surrounded by an inner directing edge 5; and a plurality of circumferential rib-shaped braces 6 for supporting tips of the skews 30 and baskets 31, such braces being regularly arranged following a circumferential alignment around the middle opening 4.

The bell-shaped container 10 is defined by a cylindrical wall 11 provided with an open lower end 12, which is internally coupled and fixed to the wall 3 of the base platter 1; and a upper wall 13 extending from the cylindrical wall provided with a wide middle opening 14, which receives a closing cap 15. Said upper wall 13 is further provided with slots 16 for supporting the skews 30 and baskets 31 arranged correspondingly to the respective circumferential ribs 6 supporting tips of the skews 30 and baskets 31 located in the base platter 1. Each streak 16 consists of a rectilinear section radially extending from the middle opening 14, for the introduction and removal of one of the skews or baskets, and an enlarged end for supporting one of the skews or baskets. The upper wall 13 is further provided with steam escape streaks 17 each of them being arranged between the streaks 16 for supporting the skews and baskets.

The heat diffuser 20 is arranged immediately above the middle opening 5 of the base platter 1 and is formed by: a lower platter 21; an upper deflector 22; and feet 23. Said lower platter 21 featuring a middle section 24 having the shape of the platter itself for supporting an amount of charcoal 52 in order to provide meat with a typical barbecue taste; and curved, oblong openings 25 arranged around the middle section 24. The upper deflector 22 is disk-shaped and rests above the middle section 24 and openings 25 of the lower platter 21. The feet 23 interconnect the lower platter 21 with the diffuser 22 and have sections which project downwards from the lower platter 21, and are supported over a section of the base platter 1 around the inner edge 5.

Preferably, each skew 30 comprises a flat rod 32, which pierces the meat to be roasted and a handle 33 located at one end of the rod. Each basket 31 consist of a central rod 34; two articulated baskets 35 mounted on the rod, between which the meat to be roasted is kept fastened, and a handle 36 provided at the rod end. The tips of the rods 32 and 34 of said skews 30 and said baskets 31 are supported over circumferential braces 6 of the base platter 1. Intermediate extensions of said skews and baskets support the meat and extend vertically along the bell-shaped container 10. Upper ends of the rods 32 and 34 of said skews and baskets located close to handles 33 and 36 thereof, get coupled with the streaks 16 of the upper wall 13 of the bell-shaped container 10, and the handles 33 and 36 are located above the upper wall 13 of the bell-shaped container. Rods 32 and 34 are preferably flat to work in cooperation with the streaks 16 and provide a better stabilization when arranged at their enlarged ends.

The grill, built as described above, works as follows. The base platter 1 is supported on the gas burner 50 in such way that a flame 51 thereof gets into its middle opening 4. The middle section 24 of the diffuser 20 receives an amount of charcoal 52, and is supported over the base platter 1 so that the lower platter 21, the middle section 24 and the diffuser 22 are above the middle opening 4 of the base platter 1. The bell-shaped container 10 is coupled inside the peripheral wall 3 of the base platter 1. The skews 30 and baskets 31 holding the meat to be roasted are introduced through the middle opening 14 of the upper wall 13 of the bell-shaped container 10, and their tips are supported over circumferential braces 6 of the base platter 1, and their upper sections located close to handles 33 and 36, are coupled with the streaks 16 of the upper wall 13 of the bell-shaped container 10. A cap 15 is applied to the opening 14 of the bell-shaped container 10. The gas burner 50 is lit. The flame heat ignites the charcoal 52 contained in the middle section 24, and the diffuser 20 inside the bell-shaped container 10, spreads it all around until it reaches up to the cuts of meat held by the skews 30 and the baskets 31 arranged around the middle opening 4 of the base platter 1, and as a consequence, around the flame 51 of the gas burner 50. The, heat coming from the gas burner and charcoal acts to roast the meat while providing the meat with the taste as if it had been prepared with the heat and flame coming from the charcoal only, as occurs with traditional "open flame" barbecue preparation. Furthermore, in order to turn the meat, each skew 30 or basket 31 is removed from its streak 16 through its narrow, rectilinear section, then rotated around itself and reinserted into the streak 16 to stabilize its enlarged end.

Therefore, the grill enables the preparation of a "open flame" style barbecuing using modem cooking resources, namely the gas oven.

Further, the grill construction enables the equipment to be a portable, easy-to-use, and furthermore is easy to clean after barbecuing has been completed.

According to the basic above-described construction, the grill can incorporate changes related to details of materials, dimensions, construction and/or configuration, without departing from the scope of the protection claimed in the appended claims.

In accordance with the foregoing, the casing may be either split into two parts or made as one single piece.

## Claims

1. An arrangement for a grill, **characterized by**: a base platter (1); a bell-shaped container (10); a heat diffuser (20); and a set of vertical skews (30) and baskets (31); said base platter (1) being formed by a bottom part (2) selected to be supported over a gas burner (50) of a gas oven; and a not too high peripheral wall (3) where the upper bell-shaped container (10) is coupled and supported; said bottom part (2) being provided with a middle opening (4) for a flame from the gas burner (50) to get in and surrounded by an inner directing edge (5); and a plurality of circumferential rib-shaped braces (6) for supporting tips of the skews (30) and baskets (31), such braces (6) being regularly arranged around the middle opening (4) following a circumferential alignment; the bell-shaped container (10) is defined by a cylindrical wall (11) provided with an open lower end (12), which is internally coupled and fixed to the wall (3) of the base platter is (2); and a upper wall (13) extending from the cylindrical wall, provided with a wide middle opening (14) for receiving a closing cap (15); said upper wall (13) being further provided with streaks (16) for supporting the skews (30) and baskets (31), arranged correspondingly to the respective circumferential ribs (6) for supporting the tips of the skews (30) and baskets (31) located on the base platter (1), each streak (16) being formed by a rectilinear section radially extending from the middle opening (14) for the introduction and removal of one of the skews or baskets, and an enlarged end for supporting one of the skews or baskets; said upper wall (13) being further provided with steam outlet streaks (17) each one arranged between the streaks (16) for supporting the skews and baskets; a heat diffuser (20) being arranged immediately above the middle opening (4) of the base platter (1) and formed by a lower platter (21) an upper deflector (22) and feet (23); said lower platter (21) featuring a middle section (24) in the shape of the platter itself, which supports an amount of charcoal, and curved, oblong openings (25) arranged around the middle section (24); the upper deflector (22) being disk-shaped and located above the middle section (24) and openings (25) of the lower platter (21); the feet (23) interconnecting the lower platter (21) with the upper deflector (22) and featuring sections which project downwards from the lower platter (21) and are supported on a section of the base platter (1) around the inner edge (5); each skew (30) comprising a rod (32), arranged to receive meat to be roasted and a handle (33) located at one rod end; each basket (31) comprising a middle rod (34), two articulated baskets (35) mounted on the middle rod (34) between which meat to be roasted can be fixed, and a handle (36) provided at an end of the rod; the skews (30) and baskets (31) resting with the tips of their rods (32, 34) supported over the circumferentially arranged braces (6) of the base platter (1); the intermediate extensions of said skews and baskets supporting the meat and extending vertically along the bell-shaped container (10) and upper ends of the rods (32, 34) of said skews and baskets close to the handles (33, 36) remaining coupled with the streaks (16) of the upper wall (13) of the bell-shaped container (10).

2. The arrangement for a grill, as claimed in claim 1, **characterized in that** the rods (32, 34) are flat.

## Patentansprüche

1. Anordnung für einen Grill, **gekennzeichnet durch**: eine Grundplatte (1); einen glockenförmigen Behälter (10); einen Hitzediffusor (20); und eine Menge von vertikalen Schrägstücken (30) und Körben (31); wobei die Grundplatte (1) **durch** ein Bodenteil (2) gebildet ist, das ausgewählt ist, über einem Gasbrenner (50) eines Gasofens gelagert zu sein; und eine nicht zu hohe Umfangswand (3), wo der obere glockenförmige Behälter (10) verbunden und gelagert ist; wobei das Bodenteil (2) mit einer Mittelöffnung (4) für den Eintritt einer Flamme des Gasbrenners (50) ausgestattet und von einer nach innen gerichteten Kante (5) umgeben ist; und eine Vielzahl umlaufender rippenförmiger Gegenhalter (6) zur Unterstützung von Spitzen der Schrägstücke (30) und Körbe (31), wobei derartige Gegenhalter (6) regelmäßig einer umlaufenden Anordnung folgend um die Mittelöffnung (4) angeordnet sind; wobei der glockenförmige Behälter (10) **durch** eine zylindrische Wand (11) mit einem offenen unteren Ende (12) definiert ist, welches an der Wand (3) der Grundplatte (2) intern verbunden und fixiert ist; und eine obere Wand (13), die sich von der zylindrischen Wand (11) erstreckt, die mit einer breiten Mittelöffnung (14) zur Aufnahme einer Verschlusskappe (15) ausgestattet ist; wobei die obere Wand (13) weiterhin mit Streifen (16) zur Unterstützung der Schrägstücke (30) und Körbe (31) ausgestattet ist, die entsprechend der zugehörigen umlaufenden Rippen (6) auf der Grundplatte (1) zur Unterstützung der Spitzen der Schrägstücke (30) und Körbe (31) angeordnet sind, wobei jeder Streifen (16) **durch** einen geradlinigen Abschnitt, der sich radial von der Mittelöffnung (14) erstreckt, für die Einführung und Entnahme von einem der Schrägstücke oder Körbe gebildet ist, und **durch** ein vergrößertes Ende zur Unterstützung von einem der Schrägstücke oder Körbe; wobei die obere Wand (13) ferner mit Dampfauslassstreifen (17) ausgestattet ist, wobei jeder einzelne zwischen den Streifen (16) zur Unterstützung der Schrägstücke und Körbe angeordnet ist; wobei ein Hitzediffusor (20) gleich oberhalb der Mittelöffnung (4) der Grundplatte (1) angeordnet und **durch** eine untere Platte (21), einen oberen Deflektor (22) und Füße (23) gebildet ist; wobei die untere Platte (21) mit einem Mittelabschnitt (24) in der Form der Platte selbst, weicher eine Menge von Kohle aufnimmt, und gebogenen, länglichen um den Mittelabschnitt (24) angeordneten Öffnungen (25) ausgestattet ist; wobei der obere Deflektor (22) scheibenförmig ist und sich oberhalb des Mittelabschnitts (24) und der Öffnungen (25) der unteren Platte (21) befindet; wobei die Füße (23) die untere Platte (21) mit dem oberen Deflektor (22) verbinden und mit Abschnitten ausgestattet sind, welche von der unteren Platte (21) abwärts herausragen und auf einem um die innere Kante (5) umlaufenden Abschnitt der Grundplatte (1) gelagert werden; wobei jedes Schrägstück (30) einen Stab (32) umfasst, der zur Aufnahme von zu bratendem Fleisch angeordnet ist, und einen Griff (33), der sich an einem Stabende befindet; wobei jeder Korb (31) einen Mittelstab (34) umfasst, zwei bewegliche an dem Mittelstab (36) montierte Körbe (35), zwischen welchen zu bratendes Fleisch fixiert werden kann, und einen Griff (36), der an einem Stabende bereitgestellt ist; wobei die Schrägstücke (30) und Körbe (31) mit den Spitzen ihrer Stäbe (32, 34) gelagert über den umlaufend angeordneten Gegenhaltern (6) der Grundplatte (1) liegen; wobei die dazwischen liegenden Erweiterungen der Schrägstücke und Körbe das Fleisch unterstützen und sich vertikal entlang des glockenförmigen Behälters (10) erstrecken, und obere Enden der Stäbe (32, 34) der Schrägstücke und Körbe, die nahe an den Griffen (33, 36) sind, mit den Streifen (16) der oberen Wand (13) des glockenförmigen Behälters (10) verbunden verbleiben.

2. Anordnung für einen Grill, wie in Anspruch 1 beansprucht, **dadurch gekennzeichnet, dass** die Stäbe (32, 34) flach sind.

## Revendications

1. Agencement pour gril, **caractérisé par** : un plateau de base (1) ; un contenant en forme de cloche (10) ; un diffuseur de chaleur (20) ; et un ensemble de piques à brochettes (30) et de paniers (31) verticaux ; ledit plateau de base (1) étant formé par une partie inférieure (2) choisie pour être supportée au-dessus d'un brûleur à gaz (50) d'un four à gaz ; et une paroi périphérique (3) pas trop haute à laquelle est couplé le contenant supérieur en forme de cloche (10) et qui le supporte ; ladite partie inférieure (2) étant munie d'une ouverture médiane (4) permettant de faire entrer une flamme du brûleur à gaz (50) et entourée par un bord (5) dirigé vers l'intérieur ; et une pluralité de supports (6) circonférentiels en forme de nervure servant à supporter les extrémités des piques à brochettes (30) et des paniers (31), de tels supports (6) étant agencés de manière régulière autour de l'ouverture médiane (4) suivant un alignement circonférentiel ; le contenant en forme de cloche (10) est défini par une paroi cylindrique (11) dotée d'une extrémité inférieure ouverte (12), qui, à l'intérieur, est couplée et fixée à la paroi (3) du plateau de base (2) ; et une paroi supérieure (13) s'étendant depuis la paroi cylindrique munie d'une grande ouverture médiane (14) servant à recevoir un couvercle de fermeture (15) ; ladite paroi supérieure (13) étant dotée en outre de stries (16) servant à supporter les piques à brochettes (30) et les paniers (31), agencés de manière correspondante aux nervures circonférentielles (6) respectives permettant de supporter les extrémités des piques à brochettes (30) et des paniers (31) situés sur le plateau de base (1), chaque strie (16) étant formée d'une section rectiligne s'étendant radialement depuis l'ouverture médiane (14) permettant d'introduire et de retirer un des piques à brochettes ou un des paniers, et une extrémité agrandie permettant de supporter un des piques à brochettes ou un des paniers ; ladite paroi supérieure (13) étant dotée en outre de stries de sortie de vapeur (17) dont chacune est disposée entre les stries (16) pour supporter les piques à brochettes et paniers ; un diffuseur de chaleur (20) étant agencé immédiatement au-dessus de l'ouverture médiane (4) du plateau de base (1) et formé par un plateau inférieur (21), un déflecteur supérieur (22) et des pieds (23) ; ledit plateau inférieur (21) présentant une section médiane (24) de la même forme que le plateau lui-même, qui supporte une certaine quantité de charbon de bois et des ouvertures (25) oblongues, incurvées disposées autour de la section médiane (24) ; le déflecteur supérieur (22) étant en forme de disque et situé au-dessus de la section médiane (24) et des ouvertures (25) du plateau inférieur (21) ; les pieds (23) raccordant le plateau inférieur (21) avec le déflecteur supérieur (22) et présentant des sections qui font saillie vers le bas à partir du plateau inférieur (21) et sont supportées sur une section du plateau de base (1) autour du bord intérieur (5) ; chaque pique à brochettes (30) comprenant une tige (32) agencée pour recevoir la viande à griller et un manche (33) situé à une extrémité de la tige ; chaque panier (31) comprenant une tige médiane (34), deux paniers articulés (35) montés sur la tige médiane (34) entre lesquels la viande à griller peut être fixée, et un manche (36) disposé à une extrémité de la tige ; les piques à brochettes (30) et les paniers (31) reposant avec les extrémités de leurs tiges (32, 34) supportées au-dessus des supports (6) disposés sur la circonférence du plateau de base (1) ; les extensions intermédiaires desdits piques à brochettes et paniers supportant la viande et s'étendant verticalement le long du contenant en forme de cloche (10) et des extrémités supérieures des tiges (32, 34) desdits piques à brochettes et paniers proches des manches (33, 36) qui restent couplés avec les stries (16) de la paroi supérieure (13) du contenant en forme de cloche (10).

2. Agencement pour gril, selon la revendication 1, **caractérisé en ce que** les tiges (32, 34) sont plates.
